# EUROPEAN PATENT SPECIFICATION

(11) **EP 1 630 097 B1**
(45) Date of publication and mention of the grant of the patent: **06.10.2010**
(21) Application number: 05076991.8
(22) Date of filing: 30.08.2005
(51) Int. Cl.: B64C 27/473, B64C 27/46, B64C 27/615, B64C 27/72

(54) **Rotor blade with structurally-integrated conduit assembly**
Rotorblatt mit strukturintegriertem Leitungskanal
Pale de rotor avec canal de conduite intégré dans la structure

(30) Priority: 31.08.2004 US 930478
(43) Date of publication of application: 01.03.2006
(73) Proprietor: The Boeing Company, Chicago, IL 60606 (US)
(72) Inventor: Kennedy, Dennis K., Mesa, AZ 85213 (US); Straub, Friedrich K., Mesa, AZ 8203 (US); Murrill, Robert J., Gilbert, AZ 85234 (US)
(74) Representative: Land, Addick Adrianus Gosling

(56) References cited:
- GB-A- 732 966
- GB-A- 2 090 214
- GB-A- 2 298 624
- US-A- 4 655 685
- US-A- 4 922 096
- US-A- 6 142 425
- US-B1- 6 196 796
- US-B1- 6 322 324
- ENENKL, BERNHARD ET AL.: "Full Scale Rotor with Piezoelectric Actuated Blade Flaps" 28TH EUROPEAN ROTORCRAFT FORUM, SESSION DYNAMICS 7, PAPER 89, [Online] pages 89.0-89.14, XP002357134 Bristol, UK Retrieved from the Internet: URL:http://www.brazd.ru/books/b0007/book/2 8ef062.pdf>

## Description

### FIELD OF THE INVENTION

The present disclosure relates to rotor/wing aircraft, and more specifically, to apparatus for structurally-integrated conductive conduits for rotor blades.

### BACKGROUND OF THE INVENTION

Active control of rotor blades with the goal of reducing rotor born noise and vibration is an ongoing area of research in the helicopter and rotor-driven aircraft industry. Numerous research papers and scale model tests have predicted and demonstrated the successful reduction of airframe vibration levels and noise through a number of enabling schemes. One such scheme is active control of a hinged trailing edge flap(s) located near the blade tip of a rotor blade. The location and number of flaps relative to the blade tip can affect both the blade vibration level due to the inherent unsteady aerodynamic conditions and the noise generated at the blade tip due to blade vortex interactions depending on the configuration selected.

Successful "on blade" active control rotor systems rely on actuation means to drive the flap. Piezoelectric smart materials are currently being investigated as an actuation means by university, government, and industry-sponsored research. For example, embedded piezoelectric sheets are being investigated as a means to control trailing edge elevons. Embedded piezoelectric fibres are also being investigated to allow dynamic twist variation of a rotor blade. Alternately, discrete piezoelectric actuators coupled with actively controlled rotor blade flaps are disclosed, for example, U.S. Patent No. 6,135,713 issued to Domzalski et al., U.S. Patent No. 5,907,211 issued to Hall et al., and U.S. Patent No. 5,224,826 issued to Hall et al.

Although desirable results have been achieved, technical difficulties have been encountered. For example, traditional surface mount techniques for providing actuator power and for transmitting signals along the rotor blade may be adversely impacted by the extremely hostile vibratory and high g-field environment on the rotor blade and its components. These effects may reduce the usable life of such systems below acceptable levels due to excessive fatigue. Such systems may also undesirably degrade the structural and aerodynamic characteristics of the rotor blade.

Furthermore, efforts directed toward providing power and data signals to embedded piezoelectric actuators in rotor blades generally involve running wiring along a spanwise groove formed within the blade surface as disclosed, for example, in Full Scale Rotor with Piezoelectric Actuated Blade Flaps, 28th European Rotorcraft Forum, Session Dynamics 7, Paper 89, pg 89.7 by Enenkl et al. Additional efforts to develop a more advanced electrical bus system for directing electric power and data or control signals to embedded piezoelectric elements within the rotor blade have shown that low temperature solder joints may be degraded during blade assembly cure operations.

From the disclosure of GB-2.298.624 a rotor blade, aircraft and method are known, wherein a conduit in the form of a fibre optics line within a protective sheath for the fibre optics line is loosely arranged in a passage through the rotor.

### SUMMARY OF THE INVENTION

The present invention is directed to an elongate rotor blade, air aircraft and method of operating a rotor driven aircraft, with a main assembly body defined in the appended independent claims.

According to the invention an elongated rotor blade exhibits the features and properties of claim 1 and an aircraft according to the invention exhibits the features of claim 12. An apparatus in accordance with the present invention may advantageously provide the ability to transmit power, fluid and data signals (including optical signals) through at least one conduit along a rotor blade to embedded actuators or other devices in a manner that mitigates the effects of high fatigue cyclic strain levels on conduits, and that allows the mass and stiffness of the structurally-integrated conduit together with the matrix material in which the conduit is embedded to be tailored to achieve the desired aero-elastic properties of the rotor blade.

The conduit assembly includes a main assembly body having at least one of a conductive lead, a fluid line, and an optical fiber disposed within a matrix material, the conduit assembly extending from the root portion to the device. In alternate embodiments, the device may comprise an actuator, a smart actuator, a piezoelectric material, an electromagnetic device, an electromechanical device, a light, and a sensor.

### BRIEF DESCRIPTION OF THE DRAWINGS

Preferred and alternative embodiments of the present invention are described in detail below with reference to the following drawings.

FIGURE 1 is an isometric view of a rotor blade in accordance with an embodiment of the present invention;

FIGURE 2 is an end cross-sectional view of the rotor blade of FIGURE 1 taken along line 2-2;

FIGURE 3 is an is an enlarged elevational view of the distal coupling assembly within the cavity of the rotor blade of FIGURE 1;

FIGURE 4 is an enlarged elevational view of a power connector of the distal coupling assembly of FIGURE 3;

FIGURE 5 is an enlarged isometric view of a root portion of the rotor blade of FIGURE 1;

FIGURE 6 is an isometric view of a helicopter having a rotor blade in accordance with an embodiment of the present invention; and

FIGURE 7 is an isometric view of a rotor aircraft having a rotor blade in accordance with another embodiment of the present invention.

### DETAILED DESCRIPTION OF THE INVENTION

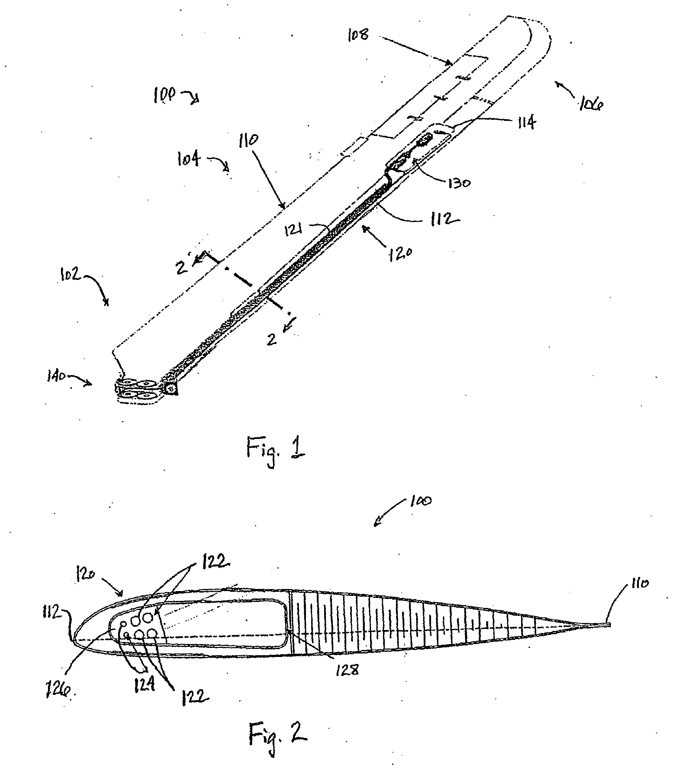

The present invention relates to apparatus and methods for structurally-integrated conductive conduits for rotor blades. Many specific details of certain embodiments of the invention are set forth in the following description and in FIGURES 1-7 to provide a thorough understanding of such embodiments. One skilled in the art, however, will understand that the present invention may have additional embodiments, and that the present invention may be practiced without several of the details described in the following description.

In general, embodiments of structurally-integrated conductive conduits for rotor blades in accordance with the present invention provide the ability to transmit power and data signals along a rotor blade to embedded actuators, sensors, or other devices in a manner that at least partially mitigates the above-noted disadvantages of conventional electrical systems. For example, as described more fully below, embodiments of the present invention may minimize the effects of high fatigue cyclic strain levels on conductive elements to achieve a longer fatigue life, and may allow the tailoring of the mass and stiffness of the structurally-integrated conductive element assembly to achieve the desired rotor blade aeroelastic properties.

More specifically, FIGURE 1 is an isometric view of a rotor blade 100 in accordance with an embodiment of the present invention. FIGURE 2 is an end cross-sectional view of the rotor blade 100 of FIGURE 1 taken along line 2-2. In this embodiment, the rotor blade 100 includes a root portion 102, an elongated body portion 104, and a tip portion 106. A controllable flap 108 is formed along a trailing edge 110 proximate the tip portion 106, and a structurally-integrated conductive conduit 120 extends through the root portion 102 and at least partially through the body portion 104 proximate a leading edge 112 of the rotor blade 100. The conductive conduit 120 includes a distal coupling assembly 130 disposed within a cavity 114, and a root coupling assembly 140 disposed within the root portion 102 of the rotor blade 100.

As best shown in FIGURE 2, the conductive conduit 120 includes a plurality of power leads 122 and a plurality of data leads 124 disposed in a matrix material 126. The leads 122, 124 and matrix material 126 form a main assembly body 121. In some embodiments, the power leads 122 and the data leads 124 may be insulated and shielded stranded copper wires molded into the matrix material 126. In FIGURE 2, the conductive conduit 120 is positioned between a spar 128 and the leading edge 112.

A wide variety of matrix materials may be used to form the conductive conduit 120 including, for example, thermosetting resins such as epoxies, polyimides, and phenolics, or thermoplastic resins such as PEI and PEEK. The choice of resin may be limited by the manufacturing processing temperature limits of the selected embedded conductive lead (*e.g*. wire insulation type), fluid line or optical fiber, etc. Composite matrix fiber materials including, for example, glass, carbon, Kevlar or metallic fibers, etc. in a number of forms, such as continuous rovings or tape, woven mats, discontinuous, chopped, wire or whiskers, etc. can also be used as a matrix material. In one particular embodiment, the matrix material comprises a chopped fiberglass in an epoxy resin. In alternate embodiments, the conductive conduit 120 may support the embedded lead(s) using a matrix resin only, without a reinforcing matrix fiber.

It will be appreciated that the conductive conduit 120 may be fabricated in any one of a number of conventional composite molding or processing techniques; such as, room temperature pour and casting, prepreg hand lay-up and autoclave or press curing, injection molding methods, resin transfer molding, or any other suitable process. The processing method may be a function of the matrix material selected and the embedded conductive lead material, which may impose processing constraints

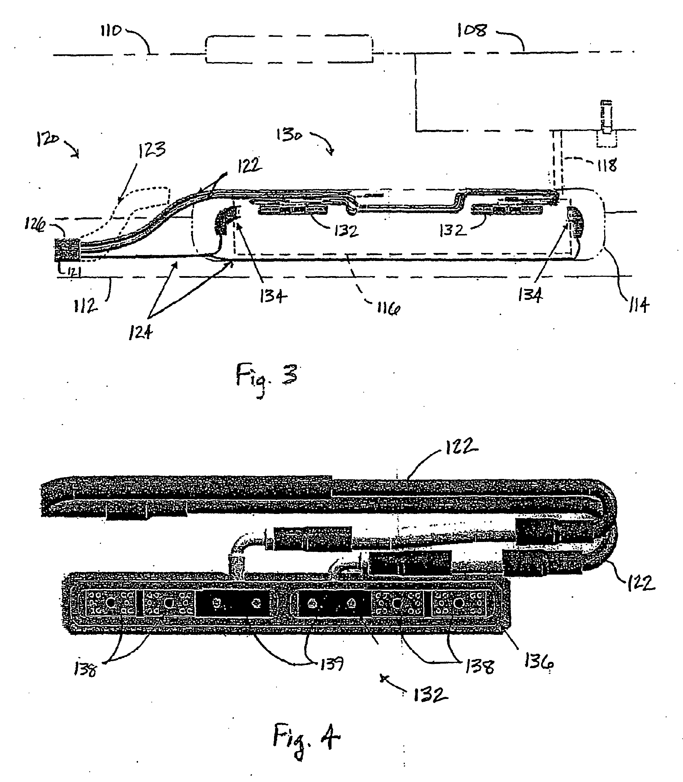

FIGURE 3 is an enlarged elevational view of the distal coupling assembly 130 within the cavity 114 of the rotor blade of FIGURE 1. In this embodiment, the distal coupling assembly 130 includes a power supply connector 132 coupled to an end of each of the power leads 122, and a data connector 134 coupled to the end of each of the data leads 124. The power supply connectors 132 and the data connectors 134 are coupled to an actuator 116 (or other suitable drive mechanism) disposed within the cavity 114 which is, in turn, operatively coupled to the flap 108 by a coupling member 118. The power supply connectors 132 may include conventional components, such as ITT connector MJSB-10PL2. As shown in FIGURE 4, the power supply connectors 132 may include a housing 136 that encloses a plurality of connectors 138 and a plurality of terminals 139 that are coupled to the power leads 122.

It will be appreciated that the main assembly body 121 of the conductive conduit 120 may be adapted to suit a particular installation or a particular set of interface requirements. For example, as shown in FIGURE 3, in an alternate embodiment, an outboard end 123 of the main assembly body 121 may be geometrically reconfigurable to suit a variety of actuator installations, sensor positions, and interface requirements.

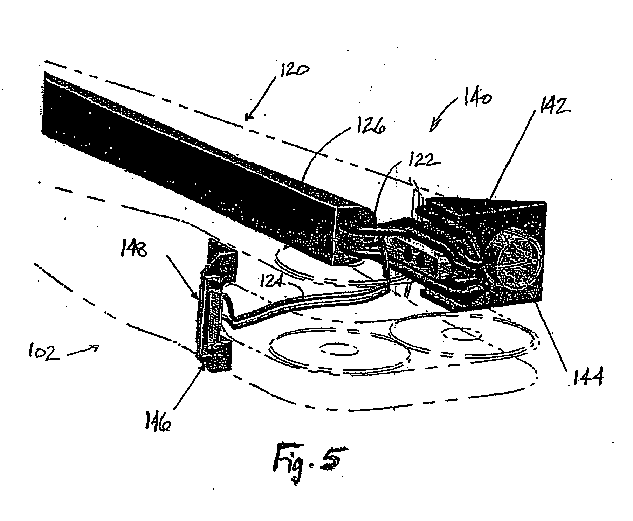

FIGURE 5 is an enlarged isometric view of the root portion 102 of the rotor blade 100 of FIGURE 1. In this embodiment, the root coupling assembly 140 includes a first bracket 142 attached to a master power supply connector 144, and a second bracket 146 attached to a master data connector 148. The power leads 122 are operatively coupled to the master power supply connector 144, and the data leads 124 are operatively coupled to the master data connector 148. The components of the root coupling assembly 140 may be standard commercial off the shelf (COTS) components specifically designed to meet the internal packaging space and loading constraints of the rotor blade environment. In various embodiments, the first and second brackets 142, 146 may be conventional brackets. Similarly, the connectors 144, 148 may be conventional connectors.

Although the conductive conduit 120 shown in FIGURES 1 - 5 has coupling assemblies 130, 140, that are depicted as being separate of the main assembly body 121, alternate embodiments can be conceived that integrate the coupling assemblies 130, 140 into the main assembly body 121 at the root and distal ends. Similarly, in further embodiments, the power and data terminations of the root and distal coupling assemblies 130, 140 need not be separate entities, but rather, may be combined into a single termination member.

In operation, electrical power may be provided through the master power connector 144 and the power leads 122 of the conductive conduit 120 to the actuator 116. Similarly, control signals and data signals may be transmitted to and received from the actuator 116 via the data leads 124 and the master data connector 148. Thus, using a suitable controller (*e.g.* a portion of the flight control system of the rotor-driven aircraft), the actuator 116 may be controllably driven to actuate the flap 108 into a desired position, such as to reduce vibration of the rotor blade 100.

Embodiments of structurally-integrated conductive conduits for rotor blades in accordance with the present invention may provide considerable advantages over the prior art. For example, embodiments of the present invention may minimize the effects of high fatigue cyclic strain levels on conductive elements. Because the power leads 122 and the data leads 124 are disposed within the matrix material 126, the fatigue on these conductive elements is reduced and a longer fatigue life may be achieved. Also, the positioning of the leads 122, 124 within the matrix material may allow the tailoring of the mass and stiffness of the structurally-integrated conductive element assembly to achieve the desired rotor blade aeroelastic properties. In other words, by proper selection and formation of the matrix material 126, the structural properties of the rotor blade 100 may be improved in comparison with the prior art. The material properties of the conductive leads in the matrix material may be selected and tailored to provide optimum electrical characteristics and blades stiffness properties when installed and bonded within the rotor blade structure. Furthermore, the integrated design of the conductive conduit 120 with the rotor blade structure geometrically can place the internal wiring as close to the blade flap-wise neutral axis as possible to minimize the effects of high flap bending cyclic strain levels on the embedded conductive elements to achieve a longer fatigue life.

When tailoring the conductive conduit 120 to transmit high-voltage electric power, the use of shielded, single conductor or multi-conductor stranded wire insulated cable allows the use of high-voltage power from noisy sources, such as switching amplifiers, in close proximity to low-voltage instrumentation data signals, in which it is desired to minimize the effects of electrical noise. The ability to place power and data signal conductive leads in close proximity, while selecting the matrix material, allows the tailoring of the mass and stiffness of the conductive conduit 120 to the overall desired blade aeroelastic properties.

It will be appreciated that a variety of alternate embodiments of apparatus and methods in accordance with the present invention may be conceived, and that the invention is not limited to the particular embodiments described above and shown in FIGURES 1 ― 5. for example, an alternate embodiments, additional leads 122, 124 may be embedded in the matrix material 126 of the conductive conduit 120 to provide a means for blade section balance, or to provide built-in spare leads or growth capacity. Also, discrete distributed masses of the suitable material may be molded into the matrix material 126 of the conductive conduit 120 to provide another means for blade section balance.

Furthermore, alternate embodiments of conductive conduits in accordance with the present invention may be adapted to provide power and data signals to any other desired type of component that may be embedded within or affixed to the rotor blade 100. For example, in alternate embodiments, conductive conduits in accordance with the present invention may be adapted to operate in conjunction with other smart material actuation technologies, including, for example, smart actuators based on magnetostrictive materials and shape memory alloys as generally disclosed in U.S. Patent No. 6,322,324 issued to Kennedy *et al*., and in U.S. Patent No. 6,453,669 issued to Kennedy *et al.*. Still further embodiments may be adapted to operate with other methods of on-blade control to influence aerodynamic forces on rotor blades, including deployable leading edge devices, and active flow control using Lorentz force (voice coil) actuators of the type generally disclosed, for example, in U.S. Patent No. 5,938,404 issued to Domzalski *et al.* In addition, embodiments of the present invention may be adapted to operate with a variety of conventional devices, such as electromagnetic, electromechanical, and hydraulic devices. For example, one or more of the power leads 122 of the conductive conduit 120 may be replaced with a hydraulic or pneumatic supply line to actuate conventional hydraulic or pneumatic actuators.

Alternate embodiments the present invention may also be used to provide power and/or signals to other on-blade devices, including sensors (*e.g*. strain gauge devices, accelerometers), lights, or any other suitable devices. Furthermore, one or more of the power leads or data leads may be replaced with an optical fiber for transmitting optical signals to and from an optically-based blade-mounted device.

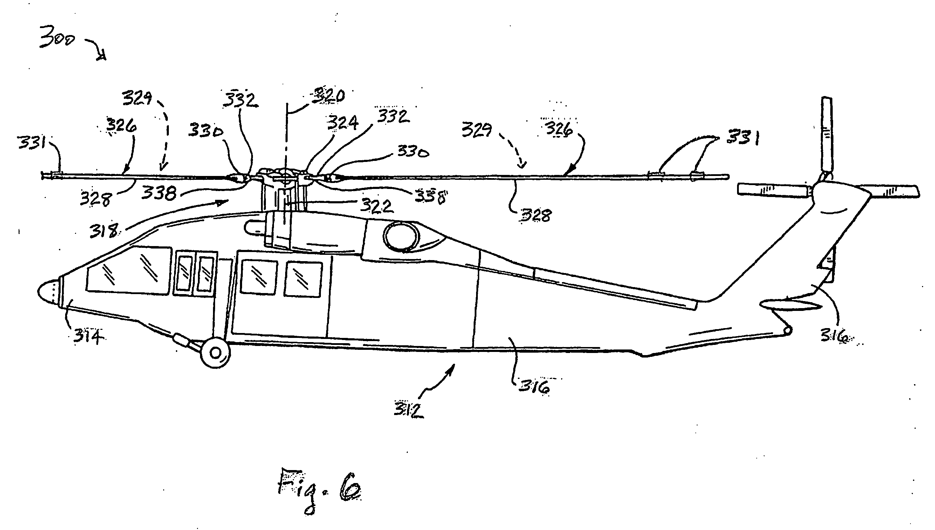

Embodiments of apparatus and methods for structurally-integrated conductive conduits for rotor blades in accordance with the present invention may be utilized on a wide variety of rotor-driven aircraft. For example, FIGURE 6 is an isometric view of a helicopter 300 having a plurality of rotor blade assemblies 326 in accordance with an embodiment of the present invention. The helicopter 300 includes a fuselage 312 which extends from a front end 314 to a tail section 316. A main rotor assembly 318 extends out of the fuselage 312 and defines an axis of rotation 320. The main rotor assembly 318 includes a main rotor shaft 322 and a main upper hub assembly 324. A plurality of main rotor blade assemblies 326 are coupled to the main rotor assembly 318 and particularly the main upper hub assembly 324.

As further shown in FIGURE 6, each of the main rotor blade assemblies 326 comprises a blade member 328 having a conductive conduit 329 in accordance with the present invention. A plurality of devices 331 are coupled to the blade members 328 and are operatively coupled to the conductive conduits 329 as described above. A pitch case 330 of the main rotor blade assembly 326 is coupled to the main upper hub assembly 324 at its root end 332. More specifically, each blade member 328 is pinned or otherwise coupled to the pitch case 330 through a plurality of fasteners (not shown), such as quick release pins. A flexible joint type connection 338 is used to connect each of the pitch cases 330 to the main upper hub assembly 324. A conventional slip ring assembly (not visible) may be used to transmit power and data from the non-rotating to the rotating portions of the hub assembly. Except for the novel rotor blade assemblies 326 in accordance with the present invention, the components and operation of the helicopter 300 are generally known and are described more fully, for example, in U.S. Patent No. 5,951,252 issued to Muylaert.

As described above, the devices 331 on the blade members 328 may be any type of device that requires power or that transmits or receives data signals, including, for example, a light, a sensor (*e.g*. strain gauge, accelerometer, thermocouple, temperature gauge, etc), a smart material (*e.g*. a piezoelectric material, magnetostrictive material, a shape memory alloy, etc.), an electromagnetic or electromechanical device, or any other suitable device. Alternately, the devices 331 may be a hydraulic or pneumatic device coupled to hydraulic or pneumatic lines disposed within the conductive conduit 329, or an optically-based device coupled to an optical fiber disposed within the conductive conduit 329. Of course, in further embodiments, the blade member 328 may include a flap, and one or more of the devices 331 may be an actuator or other drive mechanism, as described above with respect to FIGURES 1-5.

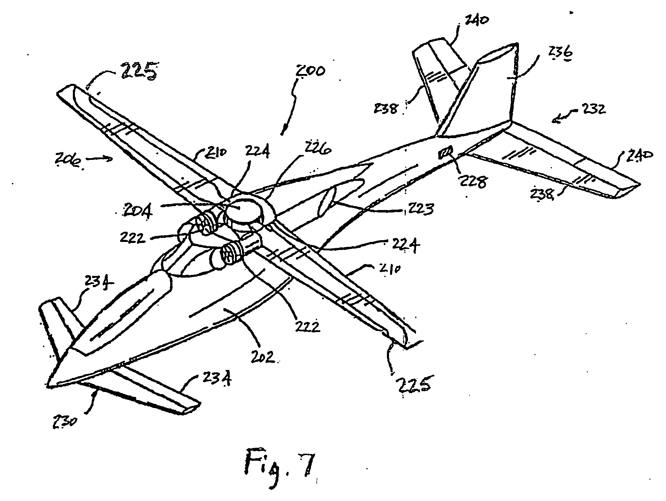

FIGURE 7 is an isometric view of a rotor aircraft 200 having rotor blades 210 in accordance with another embodiment of the present invention. In this embodiment, the aircraft 200 includes a fuselage 202; on which is rotatably mounted a rotor hub 204. Attached to the hub 204 is a rotor 206 including a pair of blades 210 having structurally-integrated conductive conduits 220 in accordance with the present invention. Each conductive conduit 220 extends from approximately the hub 204 to a device 216 coupled to the blade 210 proximate a distal end thereof. As described above, the devices 216 on the blade 210 may be any type of devices that require power or that transmit or receive data signals, or any type of hydraulic, pneumatic, or optically-based devices coupled to an optical fiber disposed within the conductive conduit 220.

As further shown in FIGURE 7, in this embodiment, the rotor aircraft 200 is powered by a pair of low bypass turbofan engines 222. Exhaust gases from the engines 222 are exhausted through nozzles 223 and through tip jets 225 disposed at the outer ends of the rotor blades 210 that provide reaction drive rotor control, as described more fully, for example, in U.S. Patent No. 5,454,530 issued to Rutherford *et al.,*. In order to control aircraft flight, the rotor hub 204 may be of the gimbaled/teetering type in order to allow flapping degrees of freedom. A pair of feathering hinges 224 permit changing of the pitch of each rotor blade 210 as with a conventional helicopter. The rotor controls may include cyclic and collective pitch controllers of known construction contained within an aerodynamic hub fairing 226 that provide control capability. Similarly, yaw control may be achieved through conventional helicopter control devices, such as a tail rotor, fenestron (or "fan-in-fin"), or a thruster 228.

The aircraft 200 further includes a canard 230 and a tail assembly 232. The canard 230 extends outwardly from each side of the fuselage 202, forwardly of the rotor 206. The trailing edges of the canard 230 include flaperons 234. The tail assembly 232 is conventional with respect to other fixed wing aircraft, and includes a vertical tail portion 236 as well as two horizontal portions 238 extending outwardly from each side of the fuselage 202, rearwardly of the rotor 206. Each of the horizontal portions 238 also includes a flaperon 240.

It should be understood that the invention is not limited to the particular embodiments of rotor blades described above and shown in the accompanying figures, and that a wide variety of blade shapes may be conceived in accordance with the teachings of the present disclosure. More specifically, a wide variety of blades may be conceived having differing degrees of camber, aspect (thickness over chord) ratio, size, or other desired design parameters, and that vary from the representative blades shown in the accompanying figures.

It will also be appreciated that a wide variety of rotor driven aircraft may be conceived that include rotor blades having a structurally-integrated conductive conduit in accordance with alternate embodiments of the present invention, and that the invention is not limited to the particular aircraft embodiments described above and shown in FIGURES 6 and 7. The inventive apparatus disclosed herein may be employed in any other type of rotor aircraft, including, for example, those manned and unmanned rotor aircraft shown and described in Jane's All the World's Aircraft published by Jane's Information Group of Coulsdon, Surrey, United Kingdom, and The Illustrated Encyclopedia of Military Aircraft written by Enzo Angelucci and published by Book Sales Publishers, Inc..

While preferred and alternate embodiments of the invention have been illustrated and described, as noted above, many changes can be made without departing from the scope of the invention. Accordingly, the scope of the invention is not limited by the disclosure of these preferred and alternate embodiments. Instead, the invention should be determined entirely by reference to the claims that follow.

## Claims

1. An elongated rotor blade (100), comprising:
- a rotor blade body (104) having a root portion (102) and a distal portion (106) spaced apart from the root portion;
- a device coupled to the body; and
- at least one conduit (122, 124) comprising at least one of a conductive lead, a fluid line, and an optical fiber disposed within the rotor blade body and extending from the root portion to the device,
**CHARACTERISED BY**
a main assembly body (120, 121) comprising a matrix material (126) and the at least one of a conductive lead, a fluid line, and an optical fiber (122, 124) embedded in the matrix material (126), the main assembly body (120, 121) with the embedded at least one of a conductive lead, a fluid line, and an optical fiber therein being structurally integrated into the rotor blade body (104), wherein mass and stiffness of the structurally-integrated main assembly body with the at least one of a conductive lead, a fluid line, and an optical fiber embedded therein are tailored for desired blade aero-elastic properties.

2. The elongated rotor blade of claim 1, wherein the device comprises an actuator, and wherein the rotor blade further comprises a flap moveably coupled to the rotor blade body proximate the distal portion, the actuator being operatively coupled to the flap and adapted to move the flap.

3. The elongated rotor blade of claim 1 or 2, wherein the device is coupled to the rotor blade body proximate the distal portion.

4. The elongated rotor blade of any of claims 1-3, wherein the device comprises at least one of an actuator, a smart actuator, a piezoelectric material, an electromagnetic device, an electromechanical device, a hydraulic actuator, a pneumatic actuator, a light, and a sensor.

5. The elongated rotor blade of any of claims 1-4, wherein the at least one of a conductive lead, a fluid line, and an optical fiber comprises a plurality of conductive leads (122, 124).

6. The elongated rotor blade of claim 5, wherein the plurality of conductive leads includes at least one power lead and at least one signal lead.

7. The elongated rotor blade of any of claims 1-6, wherein the rotor blade body includes an elongated spar disposed therein and extending between the root portion and the distal portion, and wherein the main assembly body is disposed proximate the spar.

8. The elongated rotor blade of claim 7, wherein the rotor blade body includes a leading edge and a trailing edge, and wherein the main assembly body is disposed between the spar and the leading edge.

9. The elongated rotor blade of any of claims 1-8, wherein the matrix material comprises at least one a thermosetting resin, a thermoplastic resin, a material including one or more fibres, a chopped fibreglass in an epoxy resin, and a matrix resin without a reinforcing matrix fibre.

10. The elongated rotor bladeof any of claims 1-9, wherein the main assembly body has at least one of the at least one of a conductive lead, a fluid line, and an optical fiber formed within the matrix material, the at least one of a conductive lead, a fluid line, and an optical fiber being adapted to transmit at least one of power and data signals between the root portion and the device.

11. The elongated rotor blade of Claim 10, wherein the conduit includes a distal coupling assembly coupled to the device.

12. An aircraft, comprising:
a fuselage; and
a propulsion system operatively coupled to the fuselage and including a rotor having at least one elongated rotor blade for generating aerodynamic lift according to any of claims 1-11.

## Patentansprüche

1. Längliches Rotorblatt (100), umfassend:
- einen Rotorblattkörper (104) mit einem Wurzelabschnitt (102) und einem vom Wurzelabschnitt beabstandeten distalen Abschnitt (106);
- eine an den Körper gekoppelte Einrichtung; und
- zumindest eine Leitung (122, 124), die zumindest entweder einen Leiter oder eine Fluidleitung oder eine optische Faser umfasst, der bzw. die innerhalb des Rotorblattkörpers angeordnet ist und sich vom Wurzelabschnitt zur Einrichtung erstreckt,
**GEKENNZEICHNET DURCH**
einen Hauptanordnungskörper (120, 121), der ein Matrixmaterial (126) und zumindest entweder den Leiter oder die Fluidleitung oder die optische Faser (122, 124) eingebettet in das Matrixmaterial (126) umfasst, wobei der Hauptanordnungskörper (120, 121), mit zumindest entweder dem Leiter oder der Fluidleitung oder der optischen Faser darin eingebettet, strukturell in den Rotorblattkörper (104) integriert ist, wobei Masse und Steifigkeit des strukturell integrierten Hauptanordnungskörpers, mit zumindest entweder dem Leiter oder der Fluidleitung oder der optischen Faser darin eingebettet, auf gewünschte aeroelastische Blatteigenschaften zugeschnitten sind.

2. Längliches Rotorblatt nach Anspruch 1, wobei die Einrichtung einen Aktor umfasst, und wobei das Rotorblatt weiterhin eine Klappe umfasst, die nächst dem distalen Abschnitt beweglich an den Rotorblattkörper gekoppelt ist, wobei der Aktor an die Klappe wirkgekoppelt ist und sich eignet, um die Klappe zu bewegen.

3. Längliches Rotorblatt nach Anspruch 1 oder 2, wobei die Einrichtung nächst dem distalen Abschnitt an den Rotorblattkörper gekoppelt ist.

4. Längliches Rotorblatt nach einem der Ansprüche 1-3, wobei von einem Aktor, einem intelligenten Aktor, einem piezoelektrischen Material, einer elektromagnetischen Einrichtung, einer elektromechanischen Einrichtung, einem hydraulischen Aktor, einem pneumatischen Aktor, einer Leuchte und einem Sensor die Einrichtung zumindest eines umfasst.

5. Längliches Rotorblatt nach einem der Ansprüche 1-4, wobei zumindest entweder der Leiter oder die Fluidleitung oder die optische Faser eine Mehrzahl von Leitern (122, 124) umfasst.

6. Längliches Rotorblatt nach Anspruch 5, wobei die Mehrzahl von Leitern zumindest einen Energieleiter und zumindest einen Signalleiter beinhaltet.

7. Längliches Rotorblatt nach einem der Ansprüche 1-6, wobei der Rotorblattkörper einen länglichen Holm beinhaltet, der in demselben angeordnet ist und sich zwischen dem Wurzelabschnitt und dem distalen Abschnitt erstreckt, und wobei der Hauptanordnungskörper nächst dem Holm angeordnet ist.

8. Längliches Rotorblatt nach Anspruch 7, wobei der Rotorblattkörper eine Vorderkante und eine Hinterkante beinhaltet, und wobei der Hauptanordnungskörper zwischen dem Holm und der Vorderkante angeordnet ist.

9. Längliches Rotorblatt nach einem der Ansprüche 1-8, wobei von einem warmhärtenden Harz, einem Thermoplastharz, einem eine oder mehrere Fasern beinhaltenden Material, geschnittenen Glasfasern in einem Epoxidharz und einem Matrixharz ohne verstärkende Matrixfaser das Matrixmaterial zumindest eines umfasst.

10. Längliches Rotorblatt nach einem der Ansprüche 1-9, wobei der Hauptanordnungskörper zumindest eines aufweist von zumindest entweder dem Leiter oder der Fluidleitung oder der optischen Faser, der bzw. die innerhalb des Matrixmaterials ausgebildet ist, wobei zumindest entweder der Leiter oder die Fluidleitung oder die optische Faser angepasst ist, um zumindest entweder Energie oder Datensignale zwischen dem Wurzelabschnitt und der Einrichtung zu übertragen.

11. Längliches Rotorblatt nach Anspruch 10, wobei die Leitung eine distale Kopplungsanordnung beinhaltet, die an die Einrichtung gekoppelt ist.

12. Luftfahrzeug, umfassend:
einen Rumpf; und
ein Antriebssystem, das an den Rumpf wirkgekoppelt ist und
einen Rotor beinhaltet, der zumindest ein längliches Rotorblatt, zur Erzeugung aerodynamischen Auftriebs, nach einem der Ansprüche 1-11 aufweist.

## Revendications

1. Pale de rotor allongée (100), comprenant :
- un corps de pale de rotor (104) présentant une partie pied (102) et une partie distale (106) espacée de la partie pied ;
- un dispositif couplé au corps ; et
- au moins une conduite (122, 124), comprenant au moins un élément parmi un câble conducteur, une ligne fluidique et une fibre optique, disposée à l'intérieur du corps de pale de rotor et se prolongeant depuis la partie pied jusqu'au dispositif,
**CARACTÉRISÉE PAR**
un corps d'ensemble principal (120, 121) comprenant un matériau matriciel (126) et ledit au moins un élément parmi un câble conducteur, une ligne fluidique et une fibre optique (122, 124) incorporé dans le matériau matriciel (126), le corps d'ensemble principal (120, 121), comportant ledit au moins un élément parmi un câble conducteur, une ligne fluidique et une fibre optique incorporé dans celui-ci, étant structurellement intégré dans le corps de pale de rotor (104), la masse et la rigidité du corps d'ensemble principal structurellement intégré comportant ledit au moins un élément parmi un câble conducteur, une ligne fluidique et une fibre optique incorporé dans celui-ci étant prévues spécialement pour des propriétés aéroélastiques spécifiques adaptées aux pales.

2. Pale de rotor allongée selon la revendication 1, dans laquelle le dispositif comprend un actionneur, et dans laquelle la pale de rotor comprend en outre un volet couplé de manière mobile au corps de pale de rotor à proximité de la partie distale, l'actionneur étant couplé de manière opérationnelle au volet et adapté pour faire bouger le volet.

3. Pale de rotor allongée selon la revendication 1 ou 2, dans laquelle le dispositif est couplé au corps de pale de rotor à proximité de la partie distale.

4. Pale de rotor allongée selon l'une quelconque des revendications 1 à 3, dans laquelle le dispositif comprend au moins un élément parmi : un actionneur, un actionneur intelligent, un matériau piézoélectrique, un dispositif électromagnétique, un dispositif électromécanique, un actionneur hydraulique, un actionneur pneumatique, une lumière et un capteur.

5. Pale de rotor allongée selon l'une quelconque des revendications 1 à 4, dans laquelle l'au moins un élément parmi un câble conducteur, une ligne fluidique et une fibre optique comprend une pluralité de câbles conducteurs (122, 124).

6. Pale de rotor allongée selon la revendication 5, dans laquelle la pluralité de câbles conducteurs comprend au moins un câble d'alimentation et au moins un câble à signaux.

7. Pale de rotor allongée selon l'une quelconque des revendications 1 à 6, dans laquelle le corps de pale de rotor comporte un longeron allongé disposé dans celui-ci en se prolongeant entre la partie pied et la partie distale, et dans laquelle le corps d'ensemble principal est disposé à proximité du longeron.

8. Pale de rotor allongée selon la revendication 7, dans laquelle le corps de pale de rotor comporte un bord d'attaque et un bord de fuite, et dans laquelle le corps d'ensemble principal est disposé entre le longeron et le bord d'attaque.

9. Pale de rotor allongée selon l'une quelconque des revendications 1 à 8, dans laquelle le matériau matriciel comprend au moins une matière parmi : une résine thermodurcissable, une résine thermoplastique, un matériau comportant une ou plusieurs fibres, une fibre de verre broyée dans une résine époxyde, et une résine matricielle sans fibre matricielle de renfort.

10. Pale de rotor allongée selon l'une quelconque des revendications 1 à 9, dans laquelle le corps d'ensemble principal présente la formation, au sein du matériau matriciel, d'au moins un des au moins un éléments parmi un câble conducteur, une ligne fluidique et une fibre optique, ledit au moins un élément parmi un câble conducteur, une ligne fluidique et une fibre optique étant adapté pour transmettre des signaux de puissance et/ou des signaux de données entre la partie pied et le dispositif.

11. Pale de rotor allongée selon la revendication 10, dans laquelle la conduite comporte un ensemble de couplage distal couplé au dispositif.

12. Aéronef comprenant :
un fuselage ; et
un système de propulsion couplé de manière opérationnelle au fuselage et comportant un rotor présentant au moins une pale de rotor allongée destinée à générer une portance aérodynamique selon l'une quelconque des revendications 1 à 11.
